# EUROPEAN PATENT APPLICATION

(11) **EP 1 035 630 A2**
(43) Date of publication of application: **13.09.2000**
(21) Application number: 00104930.3
(22) Date of filing: 08.03.2000
(51) Int. Cl.: H02K 3/28, H02K 3/18, H02K 3/52

(54) **Rotating electric machine and method for connecting coils of rotating electric machine**

(30) Priority: 09.03.1999 JP 6214299; 02.08.1999 JP 21874399
(71) Applicant: TOYOTA JIDOSHA KABUSHIKI KAISHA, Aichi-ken 471-8571 (JP)
(72) Inventor: Miura, Tetsuya, Toyota-shi, Aichi-ken 471-8571 (JP); Kawabata, Yasutomo, Toyota-shi, Aichi-ken 471-8571 (JP); Toh, Ryui, Toyota-shi, Aichi-ken 471-8571 (JP); Haga, Nasayoshi, Toyota-shi, Aichi-ken 471-8571 (JP); Ishimaru, Yasuhiko, Toyota-shi, Aichi-ken 471-8571 (JP)
(74) Representative: Pellmann, Hans-Bernd, Dipl.-Ing.

(57) **Abstract**

In a rotating electric machine incorporating coils (14U-1, 16U-1, 14U-2, 16U-2) having various impedances, the coils are divided into a plurality of groups (14U-1, 16U-1 and 14U-2, 16U-2) so that each of the groups of coils have substantially equal impedances. The groups of coils (14U-1, 16U-1 and 14U-2, 16U-2) are connected in parallel to each other. Therefore, no circulating current occurs even though the coils have different impedances. Hence, the efficiency of the electric motor improves.

## Description

### BACKGROUND OF THE INVENTION

### 1. Field of Invention

The present invention relates to connection of a plurality of coils that conduct main electric currents in a rotating electric machine such as a generator, an electric motor and the like.

### 2. Description of Related Art

Rotating electric machines, such as generators, electric motors and the like, have coils that are formed by winding conductive wire on a core. Such a core has comb teeth-like protrusions and recesses. Conductive wire is wound on the protrusions, so that the protrusions serve as magnetic poles. The conductive wire is disposed in slots formed between the protrusions, that is, between the magnetic poles. The performance of a rotating electric machine improves with increases in the number of turns of the conductive wire, that is, the number of turns of coil winding. In order to increase the number of turns of coil winding without increasing the external dimensions of the core, that is, without increasing the external dimensions of the rotating electric machine, it is necessary to space-efficiently dispose the conductive wire into the slots. That is, it is necessary to increase the space factor, which is the ratio of the total of the sectional areas of the coil wires to the sectional area of the slots.

Various methods for easily forming coils and increasing the space factor have been proposed. Japanese Patent Application Laid-Open No. HEI 10-174331 discloses a rotating electric machine in which coils having a rectangular sectional shape and coils having a trapezoidal sectional shape are combined. By disposing a rectangular sectional shape coil and a trapezoidal sectional shape coil on adjacent magnetic poles, this rotating electric machine avoids interference between the coils and thereby increases the space factor as well as the ease of manufacture.

If the coils of a rotating electric machine have different sectional shapes, the coils have different impedances. Therefore, if coils of a rotating electric machine having different sectional shapes as disclosed in the aforementioned laid-open patent application are connected in parallel, there occurs an electric current circulating through the coils having different impedances. Such a circulating current provides no contribution to the output of the rotating electric machine, but reduces the efficiency of the rotating electric machine. In the rotating electric machine disclosed in the aforementioned laid-open application, all the coils of each phase are connected in series, so that no circulating current occurs.

However, if the number of coils connected in series increases, there arises a problem in that optimal electric constants cannot be obtained in the designing of a rotating electric machine. The electric constants include, for example, the resistance or inductance of the coils, or the number of linkages of fluxes of permanent magnets in the case of a permanent magnet type electric motor, or the like. The efficiency of a rotating electric machine can be improved by adjusting such electric constants. Since the number of turns of winding of a coil is a natural number, the total number of turns of winding of a plurality of coils connected in series becomes a multiple of the number of coils connected, and never assumes an intermediate number between such multiples. For example, if four coils are connected in series, the total number of turns of coil winding is a multiple of 4. If eight coils are connected in series, the total number of turns of winding is a multiple of 8. Therefore, electric constants, such as the inductance or resistance of coils connected in series or the like, are allowed to assume only discrete values, so that the design of a rotating electric machine is restricted and optimization of the design becomes difficult. Consequently, the number of coils connected in series is desired to be small.

Furthermore, if the electric current of a phase is constant, a single phase current flows through all the coils in the rotating electric machine disclosed in the aforementioned laid-open patent application. Therefore, use of a thick conductive wire is desirable or required. However, a thick wire is hard to bend and makes it difficult to form coils. This problem can be avoided by connecting coils in parallel. Parallel connection of coils reduces the current flowing through each coil and therefore allows a thinner wire to be used for forming coils. However, this solution requires an increase in the number of turns of coil winding in order to cause each coil to produce sufficient magnetic flux.

Thus, the space factor can be improved by using coils having different configurations. However, if all the coils of a phase are connected in series, the restriction on the design of a rotating electric machine increases and a difficulty may arise in the manufacture thereof. Furthermore, if all the coils of a rotating electric machine are connected in parallel, a circulating current occurs and therefore reduces the efficiency of the rotating electric machine.

### SUMMARY OF THE INVENTION

Accordingly, it is an object of the invention to provide a rotating electric machine in which coils having various impedances are interconnected in a favorable manner. It is another object of the invention to provide a coil connecting method that enables efficient connection of coils of various impedances.

To achieve the aforementioned and/or other objects, an aspect of the invention provides a rotating electric machine in which coils of each phase are divided into a plurality of coil groups, and the coil groups have substantially equal impedances and are connected in parallel. In this rotating electric machine, the coil groups connected in parallel have substantially equal impedances, so that circulating current is substantially avoided and therefore an efficiency reduction caused by circulating current is substantially avoided. The coils belonging to one of the groups may be connected in series. Furthermore, at least two of the coils belonging to one of the groups may be formed from one conductive wire.

The above-described coils of the rotating electric machine can be interconnected by a method described below. The method includes the steps of: (1) disposing a number of annular phase connecting conductors corresponding to the phases at an end portion of a core having coils, (2) connecting the phase connecting conductors to wire ends of coils of the phases corresponding to the phase connecting conductors, and (3) cutting a portion of at least one of the phase connecting conductors. In the connecting step and the cutting step, the coils of each phase are divided into a plurality of coil groups so that the coil groups have substantially equal impedances, and the coil groups are connected in parallel. The phase connecting conductors may have substantially the same shape.

### BRIEF DESCRIPTION OF THE DRAWINGS

The foregoing and further objects, features and advantages of the present invention will become apparent from the following description of preferred embodiments with reference to the accompanying drawings, wherein like numerals are used to represent like elements and wherein:
Fig. 1 shows a connected state of coils of an electric motor according to a preferred embodiment of the invention;
Fig. 2 is a schematic illustration of a conventional coil connecting method;
Fig. 3 is a schematic illustration of a coil connecting method according to an embodiment of the invention;
Fig. 4 is a graph indicating the difference in loss between electric motors employing the different coil connecting methods illustrated in Figs. 2 and 3;
Fig. 5 shows a state in which coils are mounted to a core but are not interconnected;
Fig. 6 also shows a state in which coils are mounted to a core but are not interconnected;
Fig. 7 shows a shape of a connecting conductor, wherein the connecting conductor is for the U-phase;
Fig. 8 shows a shape of a connecting conductor for neutral points;
Fig. 9 shows a state in which the connecting conductors are connected to coil wires;
Fig. 10 shows a connecting conductor for the V-phase and, more particularly, a phase positional relationship thereof to the U-phase connecting conductor shown in Fig. 7;
Fig. 11 shows a connecting conductor for the W-phase and, more particularly, a phase positional relationship thereof to the U-phase connecting conductor shown in Fig. 7;
Fig. 12 is a schematic illustration of a connected state of the coils and the connecting conductors;
Fig. 13 shows a coil connection accomplished by cutting the connecting conductors at positions indicated by "×" in Fig. 12;
Fig. 14 shows another construction of a coil group in which two coils having different shapes are formed by winding a single conductive wire; and
Fig. 15 shows a state in which coils as shown in Fig. 14 are mounted to a core, and also shows a manner of connecting the coils to the connecting conductors.

### DETAILED DESCRIPTION OF PREFERRED EMBODIMENTS

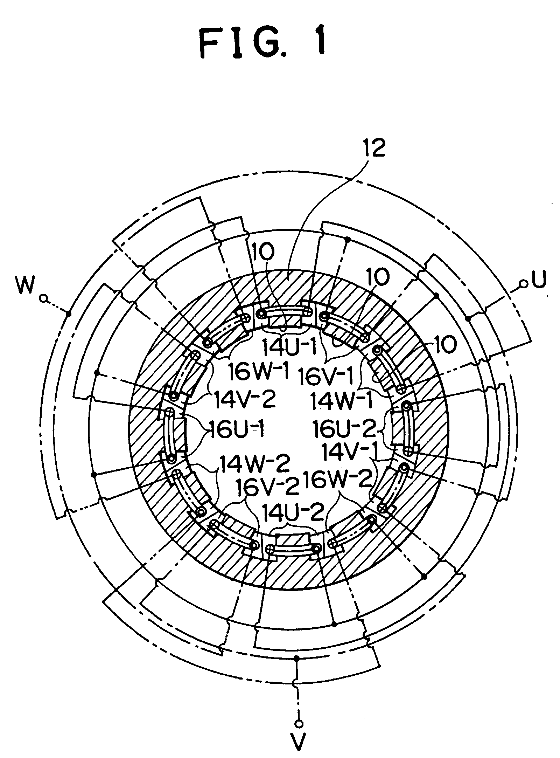

Preferred embodiments of the invention will be described hereinafter with reference to the accompanying drawings. Fig. 1 illustrates a method for connecting coils in a rotating electric machine according to an embodiment of the invention. The rotating electric machine of this embodiment is a three-phase AC electric motor employing a core 12 having twelve magnetic poles 10. Each magnetic pole 10 is provided with a coil formed by winding a conductive wire. Coils of adjacent magnetic poles 10 have different sectional shapes. More specifically, rectangular coils 14 each having a generally rectangular sectional shape and trapezoidal coils 16 each having a generally trapezoidal sectional shape are alternately disposed. In Fig. 1, the reference numerals "14" and "16" for coils are accompanied with "U", "V" or "W" indicating the phase to which the denoted coil belongs and "1" or "2" indicating the group (described below) to which the coil belongs. For example, a rectangular coil belonging to the U-phase and the first group is denoted by "14U-1".

Adoption of such different sectional shapes of coils increases the space factor, which is the ratio of the total of the sectional areas of the coil wires to the sectional area of the slots. In the electric motor of this embodiment, each coil is formed to have substantially the same shape as the final shape, separately from the core 12. The thus-formed coils are then placed onto the magnetic poles 10. The trapezoidal coils 16 are first disposed onto the corresponding magnetic poles 10. After that, the rectangular coils 14 are inserted into the spaces formed between the trapezoidal coils 16 and their adjacent magnetic poles 10. Since the coils are formed outside the core 12, it is easy to densely wind a conductive wire. Furthermore, coils can be disposed without forming gaps therebetween even if a slot has a relatively small opening and an expanded inner space.

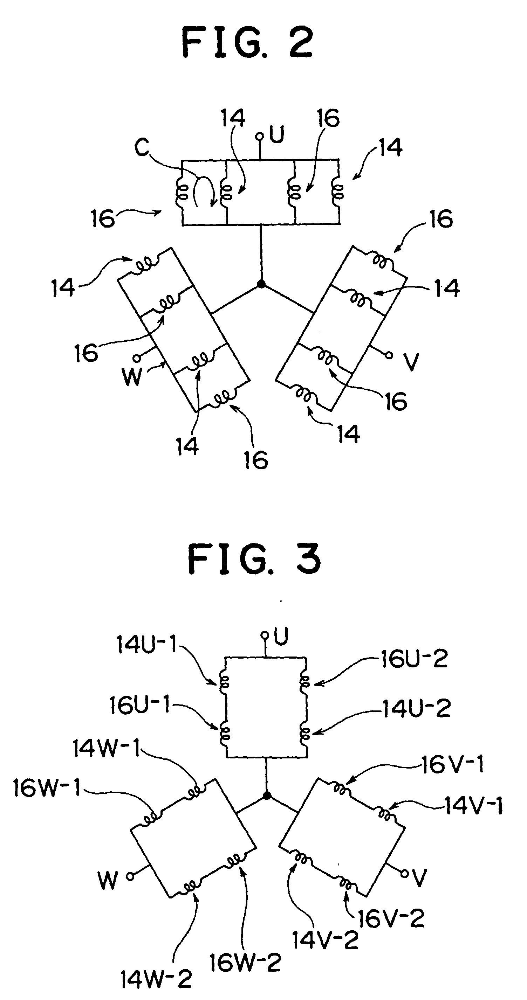

In general, coils having different sectional shapes have different impedances. Therefore, if such different coils are connected in parallel as indicated in Fig. 2, a current C circulates through coils having different impedances. This current C, termed circulating current, is a useless current that makes no contribution to the output of the electric motor, and therefore correspondingly reduces the efficiency of the electric motor.

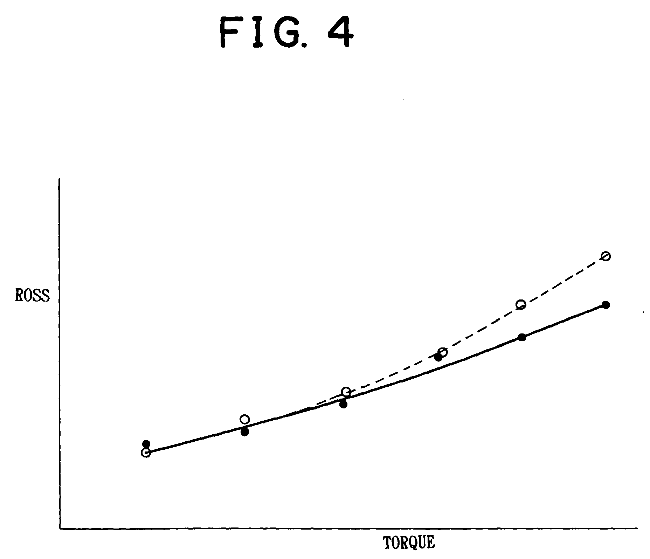

In this embodiment, however, occurrence of circulating current is substantially prevented by connecting the coils as indicated in Fig. 3. That is, groups of coils are formed so that the resultant impedances of the groups become equal, and coil groups having equal impedances are connected in parallel in this embodiment. This will be more specifically described taking the U-phase coils for an example. A rectangular coil 14U-1 and a trapezoidal coil 16U-1 are connected in series to form a first U-phase group. A rectangular coil 14U-2 and a trapezoidal coil 16U-2 are connected in series to form a second U-phase group. The first group of coils and the second group of coils are connected in parallel. Since the two groups of coils have the same impedance, there occurs no circulating current through the two coil groups. Therefore, the efficiency of the electric motor improves. In the graph of Fig. 4, a solid line indicates the loss of an electric motor whose coils are connected as indicated in Fig. 3, and a broken line indicates the loss of an electric motor whose coils are connected as indicated in Fig. 2. As can be seen from Fig. 4, connection of coils according to the invention (as in Fig. 3) reduces the loss.

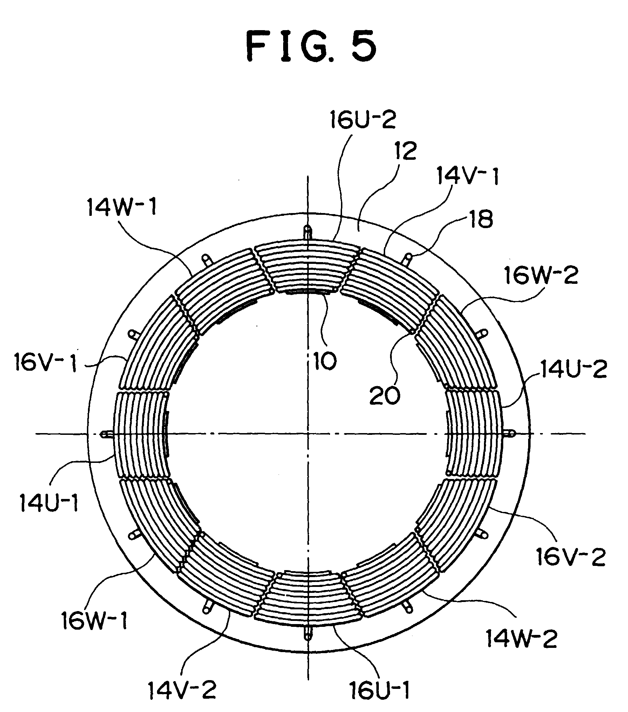

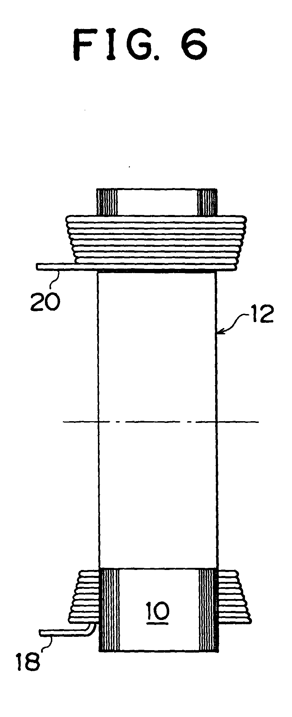

A method for connecting individual coils as indicated in Fig. 1 will next be described. Figs. 5 and 6 show a state in which the coils 14, 16 are disposed onto the magnetic poles 10 of the core 12. The sectional shapes of the individual coils are indicated by their reference numerals "14" and "16". Fig. 5 shows a view taken in a direction of a central axis of the generally cylindrical core. Fig. 6 shows a sectional illustration taken on a plane containing the core central axis or a plane parallel thereto, wherein an upper half of the illustration shows a sectional view taken on a plane extending through a boundary between coils, and a lower half shows a sectional view taken on a plane extending through a magnetic pole 10. In each coil 14, 16, both ends 18, 20 of the conductive wire forming the coil are disposed on the same coil end side. In the state shown in Fig. 5, the coils 14, 16 are not yet connected to each other.

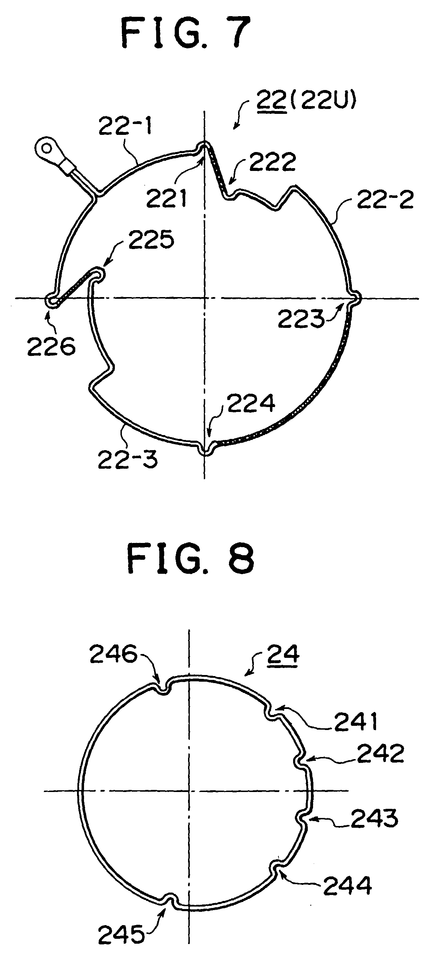

To connect these coils 14, 16, generally annular connecting conductors 22, 24 as shown in Figs. 7 and 8 are used. Connecting conductors 22 are used to connect coils of the U, V and W-phases on a one-to-one correspondence between the connecting conductors and the phases. A connecting conductor 24 is used to connect neutral points (N points). That is, a motor employs three connecting conductors 22 and one connecting conductor 24. Each connecting conductor 22 has six connecting points 221-226 for connection to the wire ends 18, 20 of the corresponding coils. The connecting conductor 24 for connecting the neutral points also has six connecting points 241-246 for connection to the wire ends 20 of the corresponding coils.

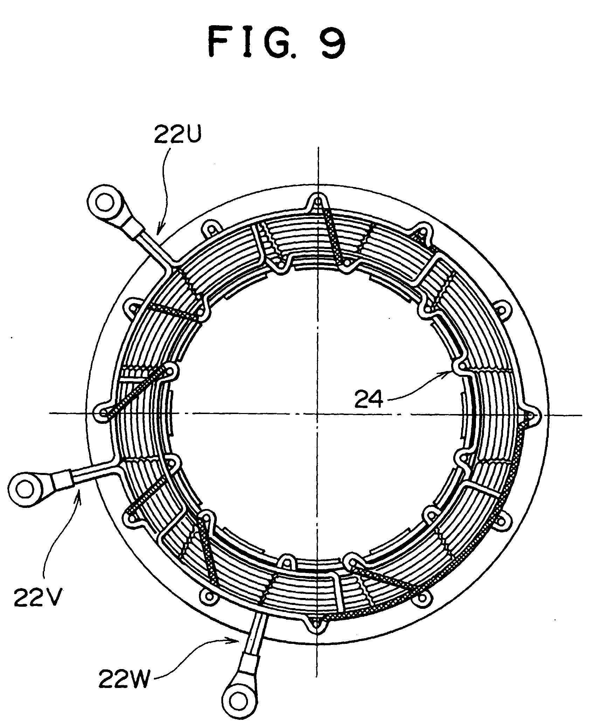

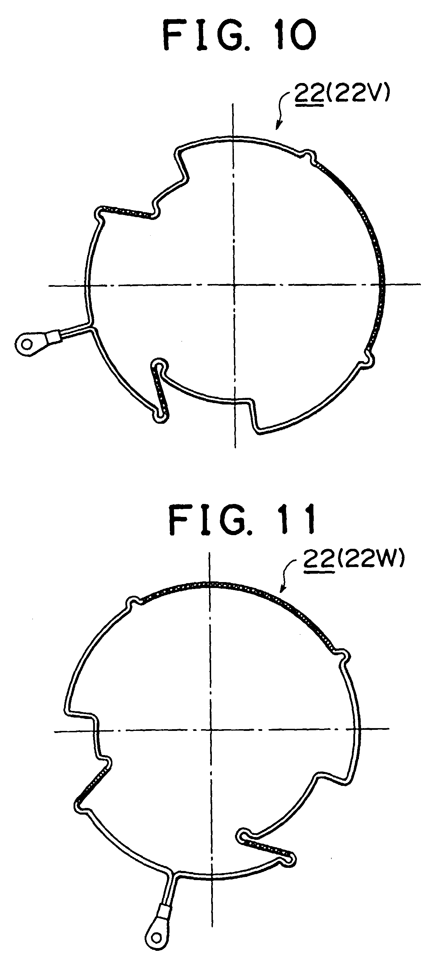

Fig. 9 shows a state in which the aforementioned four connecting conductors 22, 24 are disposed on an end portion of the core 12 and connected to the wire ends 18, 20. As shown in Fig. 9, the three connecting conductors 22 are shifted in angle from one another in accordance with their corresponding phases, that is, the U, V and W-phases. In Fig. 9, the connecting conductor for the U-phase is denoted by "22U"; the connecting conductor for the V-phase is denoted by "22V"; and the connecting conductor for the W-phase is denoted by "22W". Figs. 7, 10 and 11 show the connecting conductors 22U, 22V, 22W of the U, V and W-phases, respectively, which are extracted from the illustration of Fig. 9 without changing their angular postures.

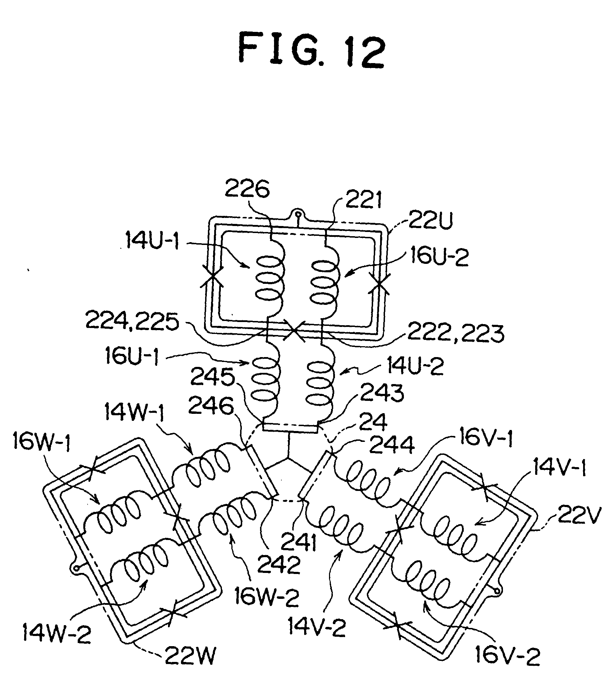

Fig. 12 is a schematic illustration of the connection of coils indicated in Fig. 9. The two wire ends of the coil 16U-2 are respectively connected to the connecting points 221, 222 of the connecting conductor 22U. The two wire ends of the coil 14U-2 are respectively connected to the connecting point 223 of the connecting conductor 22U and the connecting point 243 of the connecting conductor 24. The two wire ends of the coil 14U-1 are respectively connected to the connecting points 225, 226 of the connecting conductor 22U. The two wire ends of the coil 16U-1 are respectively connected to the connecting point 225 of the connecting conductor 22U and the connecting point 245 of the connecting conductor 24. In substantially the same manner as descried above, the wire ends of the coils 14, 16 of the V and W-phases are connected to the connecting conductors 22 and the connecting conductor 24.

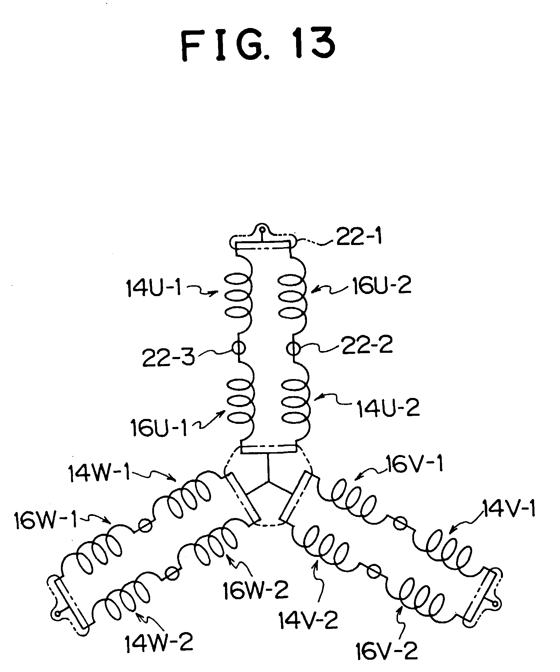

After the coils 14, 16 and the connecting conductors 22, 24 are connected, the connecting conductors 22U, 22V, 22W are cut at positions indicated by "×" in Fig. 12. More specifically, portions of the connecting conductors 22U, 22V, 22W indicated by cross-hatching in Figs. 7, 10 and 11 are removed, so that each connecting conductor 22 is reduced into three portions 22-1, 22-2, 22-3 (see Figs. 7 and 13). As a result, a coil connection as indicated by Figs. 13 and 3 is provided.

By the above-described method, the U-phase coils are divided into two groups, that is, the first group (14U-1, 16U-1) and the second group (14U-2, 16U-2), and the two groups are connected in parallel. The coils 14, 16 of the V and W-phases are similarly connected to the connecting conductors 22, 24.

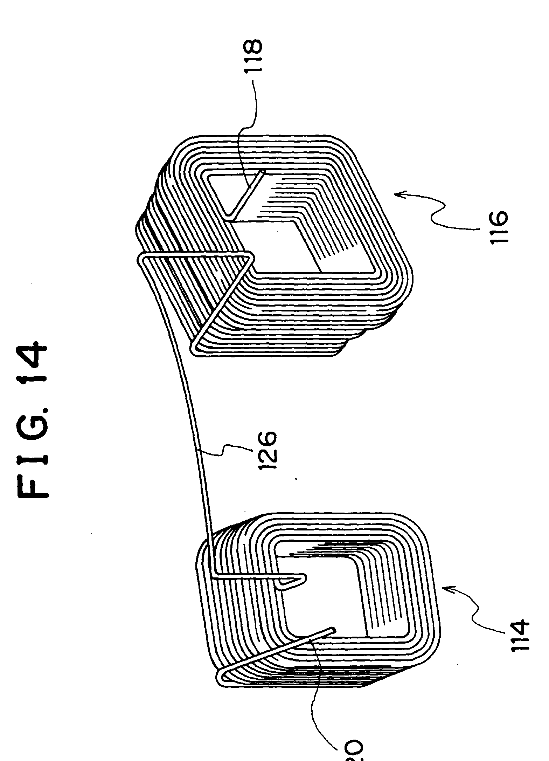

Fig. 14 shows a coil formation according to another embodiment. As shown in Fig. 14, a rectangular coil 114 and a trapezoidal coil 116 are formed by winding a single conductive wire. That is, a single continuous wire extends from a wire end 120 of the rectangular coil 114 to a wire end 118 of the trapezoidal coil 116. The length of a connecting wire portion 126 is determined taking into consideration the distance or interval between the coils 114, 116 that is set when the coils are disposed on a stator. The rectangular coil 114 and the trapezoidal coil 116 correspond to the rectangular coil 14 and the trapezoidal coil 16 of the above-described embodiment. The coils 114, 116 have such shapes that when the coils are mounted on the stator, the coils substantially fill the spaces between the magnetic poles of the stator without leaving a gap.

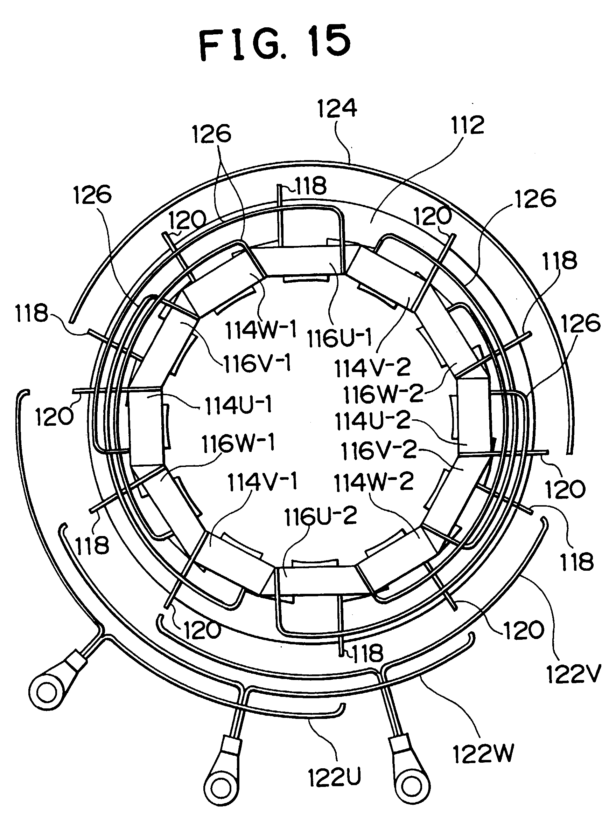

Fig. 15 shows a state in which coils 114, 116 as shown in Fig. 14 are assembled to a core 112. As in the above-mentioned drawings, the reference numerals "114" and "116" of the coils are accompanied with "U", "V" or "W" indicating the phase to which the denoted coil belongs and "1" or "2" indicating the group to which the coil belongs. As shown in Fig. 15, the rectangular coils 114 and the trapezoidal coils 116 are alternately disposed in a circumferential direction, thereby improving the space factor. A wire end of each coil group is connected to a phase connecting conductor 122U, 122V or 122W in accordance with the phase of the coil group, and the other wire end of each coil group is connected to a neutral point connecting conductor 124. Thus, groups of two coils formed by a single conductive wire are connected so as to achieve substantially the same coil connection as that shown in Fig. 3. Therefore, this embodiment is able to avoid occurrence of circulating current while employing coils having different impedances, as in the foregoing embodiment.

Furthermore, the phase connecting conductors 122 have no portions to be removed, unlike the connecting conductors in the foregoing embodiment. Correspondingly, waste materials are reduced and processing steps are reduced. Although in the embodiment shown in Figs. 14 and 15, two coils are formed from a single conductive wire, it is also possible to form more than two coils from a single conductive wire. If the number of magnetic poles is increased, the number of coils correspondingly increases. In such a case, the number of coils formed from a single conductive wire may be increased.

While the present invention has been described with reference to preferred embodiments thereof, it is to be understood that the present invention is not limited to the disclosed embodiments or constructions. On the contrary, the present invention is intended to cover various modifications and equivalent arrangements. In addition, while the various elements of the disclosed invention are shown in various combinations and configurations, which are exemplary, other combinations and configurations, including more, less or only a single element, are also within the spirit and scope of the present invention.

As described in the before, in a rotating electric machine incorporating coils (14U-1, 16U-1, 14U-2, 16U-2) having various impedances, the coils are divided into a plurality of groups (14U-1, 16U-1 and 14U-2, 16U-2) so that each of the groups of coils have substantially equal impedances. The groups of coils (14U-1, 16U-1 and 14U-2, 16U-2) are connected in parallel to each other. Therefore, no circulating current occurs even though the coils have different impedances. Hence, the efficiency of the electric motor improves.

## Claims

1. A rotating electric machine including a stator (12) having a plurality of projecting poles (10) that are substantially equidistantly disposed along an inner periphery of the stator (12), a rotor disposed in the stator (12), the rotor being coaxial with the stator (12) and a plurality of coils (14, 16) disposed on the projecting poles (10) of the stator (12), the plurality of coils (14, 16) being divided into a plurality of phases (U, V, W), with at least one coil in each phase having an impedance tat is different from an impedance of at least one other coil in a same phase, the rotating electric machine characterized in that the coils of each phase being divided into a plurality of coil groups (14U-1, 16U-1 and 14U-2, 16U-2) that have substantially equal impedances and that are connected in parallel to each other.

2. A rotating electric machine according to claim 1, characterized in that the coils (14U-1, 16U-1 and 14U-2, 16U-2) belonging to one of the groups are connected in series to each other.

3. A rotating electric machine according to claim 1 or 2, characterized in that at least two of the coils belonging to one of the groups are formed from a single conductive wire (22).

4. A rotating electric machine according to claim 1, 2 or 3, characterized in that coils (14, 16) disposed adjacent to each other have different shapes such that the adjacent coils do not substantially interfere with each other.

5. A rotating electric machine according to claim 1, characterized in that each of the coil groups (14U-1, 16U-1 and 14U-2, 16U-2) includes at least two of the coils (14, 16) connected in series to each other.

6. A rotating electric machine according to claim 5, characterized in that each phase (U, V, W) includes two of the coil groups (14U-1, 16U-1 and 14U-2, 16U-2).

7. A method for connecting coils (14, 16) of a rotating electric machine that have different impedances, the coils being (14, 16) divided into a plurality of phases (U, V, W), with at least one coil in each phase having an impedance that is different from an impedance of at least one other coil in a same phase, the method characterized by comprising the steps of:
disposing a plurality of annular phase connecting conductors (22) corresponding to the phases (U, V, W), at an end portion of a core (12) having the coils (14, 16);
connecting the phase connecting conductors (22) to wire ends of the coils of the phases corresponding to the phase connecting conductors (22); and
cutting a portion of at least one of the phase connecting conductors (22),
wherein in the connecting step and the cutting step, the coils of each phase are divided into a plurality of coil groups (14U-1, 16U-1 and 14U-2, 16U-2) that have substantially equal impedances and that are connected in parallel. 8. A method according to claim 7, characterized in that the phase connecting conductors (22) have substantially identical shapes.
